Europäisches Patentamt

(19) European Patent Office

Office européen des brevets

(11) Publication number: **0 008 941**
**B1**

(12) **EUROPEAN PATENT SPECIFICATION**

(45) Date of publication of patent specification: **15.12.82**

(51) Int. Cl.³: **G 02 B 7/26**

(21) Application number: **79301823.5**

(22) Date of filing: **05.09.79**

(54) Method of terminating optical fibres.

(30) Priority: **11.09.78 US 940926**

(43) Date of publication of application:
**19.03.80 Bulletin 80/6**

(45) Publication of the grant of the patent:
**15.12.82 Bulletin 82/50**

(84) Designated Contracting States:
**BE DE FR GB IT NL SE**

(56) References cited:
**GB - A - 1 458 896**
**GB - A - 1 480 444**
**GB - A - 1 480 445**
**US - A - 3 861 781**

(73) Proprietor: **AMP INCORPORATED**
**Eisenhower Boulevard**
**Harrisburg, Pennsylvania (US)**

(72) Inventor: **Meehan, Robert Francis**
**26 Clark Lane**
**Sudbury Massachusetts (US)**
Inventor: **Williams, Russell H.**
**606 North Front Street**
**Wormleysburg Pennsylvania (US)**

(74) Representative: **Stuart-Prince, Richard Geoffrey**
**et al,**
**20 Queensmere**
**Slough, Berkshire SL1 1YZ (GB)**

Courier Press, Leamington Spa, England.

## Method of terminating optical fibres

The invention relates to the termination of optical fibres.

It is known from British Patent Specification 1503979 to terminate an optical fibre by securing an end of the fibre in a radially deformable nose of a ferrule using adhesive. The ferrule end is then press-fitted in a suitable bush, the radial deformation of the ferrule assisting in centering the fibre in the bush.

However, the thickness of the optical cladding surrounding the fibre core may differ substantially in different circumferential locations (e.g. by 30%) with the result that the core is not concentric with the ferrule or bush resulting in axial misalignment of spliced optical fibres and, in consequence, undesirable transmission losses at the connection.

Other known methods, include the removal of the optical cladding adjacent the connection, may result in losses arising from the radial transmission of light from the core through the unclad area.

According to the invention, a method of terminating an end of an optical fibre comprises the steps of removing a portion of optical cladding from an end portion of the fibre to expose a length of optical core; inserting the fibre end and adhesive into a ferrule so that the core protrudes out of the ferrule beyond a radially deformable end portion of the ferrule and the cladding extends into the end portion; press fitting a rigid alignment socket having a concentric bore in a transverse end wall on the end portion of the ferrule with the core received in the bore so that the core is concentric with the periphery of the ferrule end portion; and removing the exposed portion of the core after the adhesive has set.

The core is substantially concentric with the ferrule while the cladding extends to the optical face enabling two fibres terminated by the method of the invention to be spliced together with their optical cores in axial alignment and the optical characteristics of the fibre maintained adjacent the connection.

A specific example of the invention will now be described with reference to the accompanying drawings, in which:—

Figure 1 is an axial cross-sectional view of a partly assembled connector aligned with a locating member and an optical fibre cable;

Figure 2 is a similar view to Figure 1, with the parts assembled for grinding;

Figure 3 is a diagrammatic end view of the assembly of Figure 2; and

Figure 4 is an axial cross-sectional view of a splice connector connecting optical fibres terminated by the method of the invention.

The optical fibre cable is of conventional construction comprising a light transmitting core 2 surrounded by a sheath of optical cladding 4, overlaid with a jacket of strain-relieving fibres 8 encased in an outer sheath 6 of plastics material.

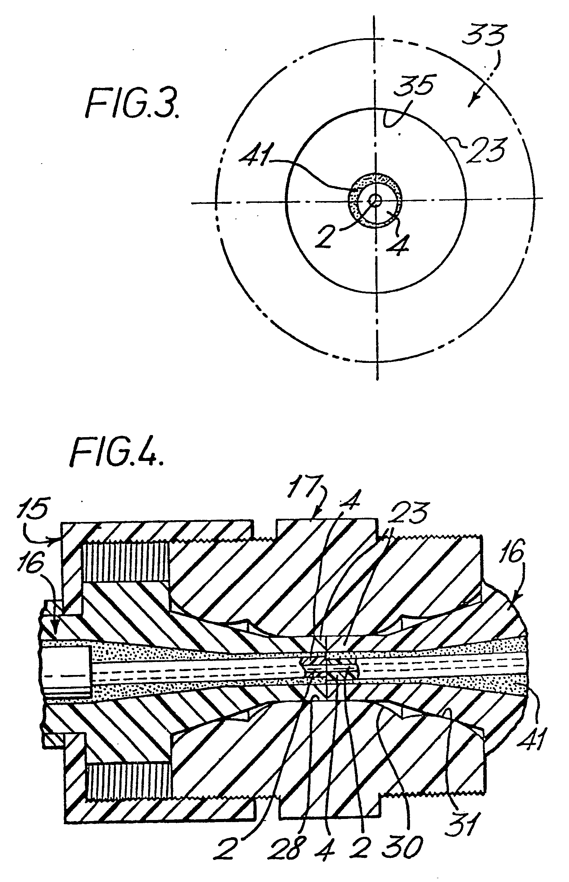

The connector may be assembled from a kit similar to that described in our Great Britain patent Specification No. 1,503,979 (8622) to which reference is hereby directed and includes a metal crimping ring 13, a locking cap 15, a ferrule 16 and a bush 17 (Figure 4).

The ferrule is moulded from plastics material with a cable receiving passageway 18 having a funnel-section rear 19, an intermediate portion of constant cross-section, a second portion 21 of funnel-section and a second portion 22 of constant cylindrical cross-section opening to the front face of the ferrule. Externally the ferrule is formed with a circumferential rib 24 and a frusto-conical nose 25 terminating in a cylindrical front portion 23. The locking cap is cylindrical having an internal screw thread and an annular inwardly directed flange 27 at one end. The bush is moulded with a cylindrical passageway 28 having flared ferrule-receiving mouths at opposite ends, each defined by two axially spaced annular ribs 30, 31 of arcuate section.

The locating member 33 is moulded from plastics material with a rigid sleeve 34 defining a cylindrical socket 35 closed at one end by a wall 36 formed with core-receiving bore 37 precisely concentric with the socket.

The cable is terminated by removing portion of exposed cladding using an insulation stripping tool (e.g. the tool disclosed in United States Patent No. 3,525,107), or a suitable solvent; inserting a suitable amount of epoxy resin 41 into the funnel-section rear 19 of the ferrule and inserting the stripped cable end into the ferrule until the optical fibre core protrudes beyond the forward end of the ferrule spreading the resin over the forward end of the ferrule.

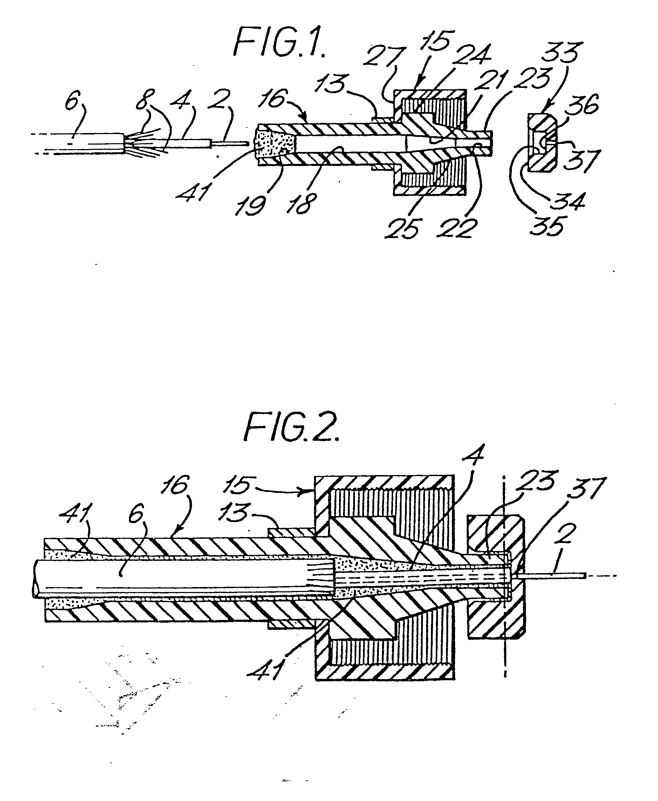

Prior to solidification of the resin, the locating socket is press-fitted over the cylindrical portion 23 of the ferrule with the exposed core passing through the bore 37. The precise concentricity of the bore 37 with the inner socket wall ensures that the core is substantially concentric with the cylindrical portion 23 of the ferrule. To ensure that the cladding extends for the entire length of the ferrule, the position of the cable may be adjusted by pushing the cable until the cladding abuts the end wall of the socket, optionally displacing the end wall a short distance from the ferrule portion 23 (Figure 2). The ring 13 is then crimped radially to compress the ferrule to grip the cable.

After the resin has set, the core, the cladding and the residual adhesive may be ground flush with the ferrule front end. If necessary, part of the ferrule front portion may also be ground away to ensure a planar optical face perpendicular to the fibre axis.

The locating member may remain on the front portion of the ferrule during grinding, being itself also ground away, at least partially, and the remains removed. Alternatively, the socket and bore may be pre-treated (by spraying) with an adhesive repellent, mold release material such as silicone or polysilicone prior to assembly, permitting release of the entire locating member after the resin has set.

Assemblies having fibres terminated by the above described method may then be screwed onto the bush 17 bringing the optical cores into the precise axial alignment in spite of variations in the cross-sectional size of the cladding and located accurately longitudinally. As the cladding extends throughout the length of the splice connection the optical benefits remain in spite of their small radial misalignment.

## Claims

1. A method of terminating an end of an optical fibre in which the fibre end is secured by adhesive (41) in a ferrule (16) having a radially deformable nose (25), characterised by the steps of removing a portion of optical cladding (4) from an end portion of the fibre to expose a length of optical core (2), inserting the fibre end and adhesive (41) into the ferrule (16) so that the core (2) protrudes out of the ferrule (16) beyond a radially deformable end portion (23) of the ferrule (16) and the cladding (4) extends into the end portion (23); press fitting a rigid alignment socket (35) having a concentric bore (37) in a transverse end wall (36) on the end portion of the ferrule with the core (2) received in the bore (37) so that the core (2) is concentric with the periphery of the end portion (23) and removing the exposed portion of the core (2) after the adhesive (41) has set.

2. A method according to Claim 1, characterised by the step of coating the interior of the socket (35) with an adhesive releasable material prior to press fitting onto the ferrule end portion (23) and removing the socket (35) after the adhesive (41) has set and prior to removal of the exposed portion of the core (2).

3. A method according to Claim 1, characterised by the step of removing at least part of the socket (35) simultaneously with removal of the exposed portion of the core (2) and removing any residue of the socket (35) after removal of the exposed portion of the core (2).

## Revendications

1. Procédé pour réaliser une terminaison sur une extrémité d'une fibre optique, dans lequel l'extrémité de la fibre est fixée par un adhésif (41) dans une virole (16) comportant un nez (25) déformable radialement, caractérisé par les étapes qui consistent à retirer une partie d'un revêtement optique (4) d'un tronçon extrême de la fibre pour mettre à découvert une longueur d'âme optique (2), insérer l'extrémité de la fibre et un adhésif (41) dans la virole (16) afin que l'âme (2) dépasse à l'extérieur de la virole (16) au-delà d'un tronçon extrême (23), déformable radialement, de la virole (16) et que le revêtement (4) pénètre dans le tronçon extrême (23); à emmancher à la presse une douille rigide d'alignement (35) présentant un alésage concentrique (37) dans une paroi extrême transversale (36) sur le tronçon extrême de la virole de manière que l'âme (2) soit logée dans l'alésage (37) pour que l'âme (2) soit concentrique à la périphérie du tronçon extrême (23), et à retirer le tronçon à découvert de l'âme (2) après la prise de l'adhésif (41).

2. Procédé selon la revendication 1, caractérisé par l'étape qui consiste à revêtir l'intérieur de la douille (35) avec une matière pouvant être séparée de l'adhésif avant l'emmanchement à la presse sur le tronçon extrême (23) de la virole et à retirer la douille (35) après la prise de l'adhésif (41) et avant l'élimination du tronçon à découvert de l'âme (2).

3. Procédé selon la revendication 1, caractérisé par l'étape qui consiste à enlever au moins une partie de la douille (35) en même temps que l'enlèvement du tronçon à découvert de l'âme (2) et à retirer tout résidu de la douille (35) après l'enlèvement du tronçon à découvert de l'âme (2).

## Patentansprüche

1. Verfahren zum Anschließen eines Endes einer optischen Faser, bei dem das Faserende durch einen Klebstoff (41) in einer Hülse (16) mit einer radial deformierbaren Nase (25) befestigt wird, dadurch gekennzeichnet, daß ein Teil der optischen Umhüllung (4) von einem Endabschnitt der Faser abgenommen wird, um ein Stück des optischen Kerns (2) freizulegen, daß das Faserende und ein Klebstoff (41) in die Hülse (16) eingeführt werden, so daß der Kern (2) aus der Hülse (16) über einen radial deformierbaren Endabschnitt (23) der Hülse (16) hinausragt und die Umhüllung (4) sich in den Endabschnitt (23) hineinerstreckt, daß ein starrer Ausrichtsockel (35) mit einer konzentrischen Bohrung (37) in einer querliegenden Endwand (36) auf dem Endabschnitt der Hülse im Preßsitz aufgepaßt wird, wobei der Kern (2) in der Bohrung (37) aufgenommen wird, so daß der Kern (2) konzentrisch mit dem Umfang des Endabschnittes (23) liegt, und daß der freigelegte Abschnitt des Kerns (2) entfernt wird, nachdem der Klebstoff (41) ausgehärtet ist.

2. Verfahren nach Anspruch 1, dadurch gekennzeichnet, daß das Innere des Sockels (35) mit einem vom Klebstoff lösbaren Material vor dem Preßsitz-Aufpassen auf den Hülsenendabschnitt (23) beschichtet wird, und daß der Sockel (35) nach dem Aushärten des Klebstoffs (41) und vor dem Entfernen des freigelegten Abschnitts des Kerns (2) abgenommen wird.

3. Verfahren nach Anspruch 1, dadurch gekennzeichnet, daß wenigstens ein Teil des Sockels (35) gleichzeitig mit dem Entfernen des freigelegten Abschnitts des Kerns (2) entfernt wird, und daß alle Reste des Sockels (35) nach dem Entfernen des freigelegten Abschnitts des Kerns (2) entfernt werden.

# FIG.1.

# FIG.2.

1

FIG.3.

FIG.4.